(19) **Europäisches Patentamt / European Patent Office / Office européen des brevets**

(11) **EP 1 728 392 B1**

(12) **EUROPEAN PATENT SPECIFICATION**

(45) Date of publication and mention
of the grant of the patent:
**20.02.2019 Bulletin 2019/08**

(21) Application number: **05708960.9**

(22) Date of filing: **07.03.2005**

(51) Int Cl.:
*H04N 21/21* *(2011.01)*    *H04N 21/23* *(2011.01)*
*H04N 21/2747* *(2011.01)*    *H04N 21/438* *(2011.01)*
*H04N 21/443* *(2011.01)*    *H04N 21/643* *(2011.01)*

(86) International application number:
**PCT/IB2005/050831**

(87) International publication number:
**WO 2005/091637 (29.09.2005 Gazette 2005/39)**

(54) **APPLICATION CONTROLLED REMOTE STORAGE.**

ANWENDUNGSGESTEUERTE FERNSPEICHERUNG

MEMOIRE A DISTANCE CONTROLEE PAR UNE APPLICATION

(84) Designated Contracting States:
**AT BE BG CH CY CZ DE DK EE ES FI FR GB GR HU IE IS IT LI LT LU MC NL PL PT RO SE SI SK TR**

(30) Priority: **19.03.2004 EP 04101133**

(43) Date of publication of application:
**06.12.2006 Bulletin 2006/49**

(73) Proprietor: **Koninklijke Philips N.V.**
**5656 AE Eindhoven (NL)**

(72) Inventors:
• **NEWTON, Philip Steven**
**75008 Paris (FR)**
• **KELLY, Declan Patrick**
**75008 Paris (FR)**

(74) Representative: **de Haan, Poul Erik et al**
**Philips International B.V.**
**Philips Intellectual Property & Standards**
**High Tech Campus 5**
**5656 AE Eindhoven (NL)**

(56) References cited:
**US-A1- 2002 059 621**    **US-A1- 2002 184 372**
**US-A1- 2002 199 205**

• **METH K Z ET AL: "FEATURES OF THE ISCSI PROTOCOL" IEEE COMMUNICATIONS MAGAZINE, IEEE SERVICE CENTER. PISCATAWAY, N.J, US, vol. 41, no. 8, August 2003 (2003-08), pages 72-75, XP001177704 ISSN: 0163-6804**
• **YURKOSKI C F ET AL: "Using Inferno to execute Java on small devices" LANGUAGES, COMPILERS, AND TOOLS FOR EMBEDDED SYSTEMS. ACM SIGPLAN WORKSHOP LCTES'98. PROCEEDINGS SPRINGER-VERLAG BERLIN, GERMANY, [Online] 1998, pages 108-118, XP002340431 ISBN: 3-540-65075-X Retrieved from the Internet: URL:http://www.springerlink.com/media/3AA8 LU4D7G5JPM5C6WTM/Contributions/B/E/1/N/B E1 NG10HVM5961MA.pdf> [retrieved on 2005-08-11]**
• **SHARE IT! TEAM - WP4-GROUP: "Share it! deliverable#3: Description of example applications"[Online] 30 November 2002 (2002-11-30), XP002292778 Retrieved from the Internet: URL:http://www.hitech-projects.com/euproje cts/share_it/deliverables/share-it-nob-31n ov02-d3v10-final.pdf> [retrieved on 2005-08-11]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a method of providing data storage for a user device that is connectable to a remote server via a network.

The invention further relates to a method of storing auxiliary data from at least one user on a remote server that is connectable to a user device via a network for providing data storage for the user device.

The invention further relates to a user device for use in the method of providing data storage, the user device being connectable to a remote server via a network.

The invention further relates to a storage medium for use in the method, and a computer program product.

The invention relates to the field of performing interactive applications in a user device. Commonly such user devices are connectable to a network like internet, and are suitable for receiving data, such as video to be rendered and/or interactive application programs to be performed, via broadcasting and/or the network. In particular the invention relates to storing auxiliary data related to the interactive applications.

WO 01/33852 describes a system and method for recording pushed data including interactive applications. A receiving device, such as a set top box, receives a stream of digitally compressed video data according to a video encoding standard, for example the MPEG2 format. The data stream includes video and pushed interactive data (i.e. delivered to users whether or not they request such data) together constituting an enhanced user program that provides a video program and interactive functions or data to the user, such as quiz response options or live stock quotes. The data stream is broadcast to the receiving device and includes one or more application data objects representing the pushed interactive data. The application data objects may include various types of objects, including application programs for providing a number of interactive applications to the user while rendering the video data, games, etc. The applications may generate auxiliary data, such as stored commands of the user, or game settings and high scores. In the document it is assumed that the user device receiving and performing the interactive applications is provided with a local

(mass) storage unit, such as a hard disk, either in the user device or removably connected to the user device. However, in less sophisticated user devices, such as portable devices, or rendering devices such as simple optical disc players, only a small storage unit may be available to the interactive applications, or even no (nonvolatile) storage at all. Hence there is a problem of storing auxiliary data for interactive applications in such user devices.

US 2002/0199205 A1 describes a virtual storage adapter for delivering consumer entertainment services using virtual devices. The virtual devices are accessed over a highspeed quality-of-service-enabled ("QoS") communications network. A data storage device emulation unit emulates the functionality of a data storage device and a network interface comprising an IP Small Computer System Interface ("iSCSI") compatible interface connects the data storage device emulation unit to an iSCSI storage gateway on the quality of service enabled communications network.

It is an object of the invention to provide a system and network environment that allows flexible storage of auxiliary data generated by applications being performed in user devices.

The present invention is defined by the independent claims.

The measures have the effect that a virtual local storage is made available via an application interface in the user device for interactive applications that locally generate auxiliary data, or need auxiliary data generated and stored on a different, earlier moment. It is to be noted that such a virtual local storage facility is particularly, but not exclusively, relevant for user devices not having (sufficient) local storage space. Advantageously, such virtual local storage may be accessed from a different user device, e.g. by the same user accessing his remotely stored auxiliary data for playing the same game on a different user device. Moreover, the virtual local storage provides a secure data storage independent of any malfunction of the user device.

The invention is also based on the following recognition. Performing interactive applications on user devices is well known, and commonly data storage is available to store locally generated auxiliary data. However, for portable and low-end user devices such local storage may be limited or not available. The inventors have seen that the increasing availability of network connectability provides a resource that can be shaped to provide an alternative or supplement for local storage. By providing the application according to the invention, e.g. as a downloadable plug-in or broadcasted application object, a virtual local storage is made available in the user device. It has to be noted that applying such virtual local storage is not to be confused with purposely storing data on a remote computer resource, e.g. sharing or accessing a hard disk on a server via a local area network, leasing storage space from a service provider for a website, taking part in a news group or adding data to a website on internet. The virtual local storage is directly coupled to the user device, and data is only accessible for the user that originally stored the auxiliary data.

In addition it is noted that US 2002/0174430 describes a personal video recorder that uses remote storage resources for storing video for a user. A personal video recording service is described, to which the user issues a command to store a broadcast video program. However, such video data is externally available, e.g. from a broadcast or from a pay-TV channel, and is (temporarily) stored on request of the user on a networked server which may be located at the distribution facility. Hence the personal video recorder does not provide a storage function for local auxiliary data.

In an embodiment of the method of providing data storage said having the auxiliary data stored includes storing a user identification, and/or an application identification. This has the advantage that the storage application in the user device can easily identify and retrieve data that has been stored in the virtual local storage via the application interface.

In an embodiment the user device comprises read means for retrieving data from a storage medium, and the control means are arranged for retrieving applications to be performed from the storage medium. This has the advantage that the user device is enabled to load and activate the storage application from the storage medium, and therefore is able to provide virtual local storage related to the other data or interactive application from the storage medium.

In an embodiment the storage medium comprises at least one stream of real-time information. This has the advantage that the real-time information is enhanced with the storage application which provides virtual local storage related to the real-time information or other interactive applications from the storage medium.

Further embodiments are given in the dependent claims.

These and other aspects of the invention will be apparent from and elucidated further with reference to the embodiments described by way of example in the following description and with reference to the accompanying drawings, in which

Fig.1 shows a user device connectable via a network to a server,

Fig.2 shows an optical disc player connectable via a network to a server,

Fig.3 shows a storage application for providing virtual local storage,

Fig.4 shows an implementation of a storage application,

Fig.4A shows storing data on the virtual local storage,

Fig.4B shows reading data from the virtual local storage,

Fig.5 shows a sequence chart of a protocol between a storage application and a server, and

Fig.6 shows a flowchart of a storage application requiring payment. Corresponding elements in different Figures have identical reference numerals.

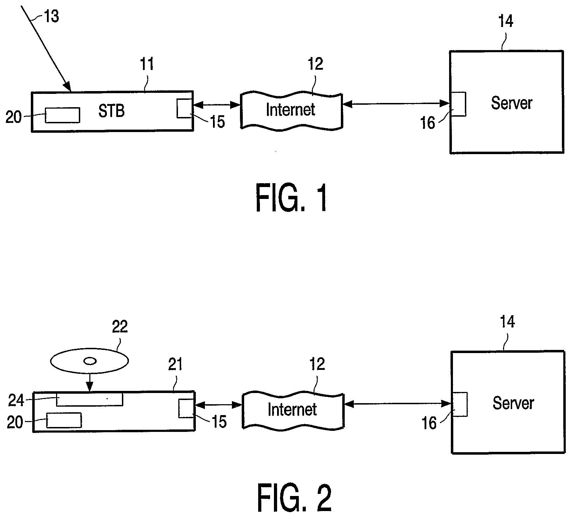

Fig.1 shows a user device connectable via a network to a server. A user device 11, for example a set top box (STB), has a receiver for receiving broadcast data such as video indicated by arrow 13. The user device has a network interface 15, e.g. a modem, for connecting the device to a network 12, e.g. the internet. A server 14 also has a network interface 16 for connecting the server device to the network 12. It is noted that user devices that are connectible to a network also include multimedia devices (e.g. a standardized multimedia home platform MHP), enhanced mobile phones, personal digital assistants, rendering devices like optical disc players, etc.

The device has a control unit 20 which is arranged to be controlled by the user, e.g. via a keyboard, a display and/or a remote control. The control unit 20 is connected via control lines, e.g. a system bus, to said network interface 15 and other elements in the user device. The control unit 20 comprises control circuitry, for example a microprocessor, a program memory and control gates, for performing the procedures and functions for accommodating a virtual data storage according to the invention as described below. The control unit 20 may also be implemented as a state machine in logic circuits.

Fig.2 shows an optical disc player connectable via a network to a server. An optical disc player 21, e.g. a Blu-ray disc player, has a read unit 24 for reading an optical disc 22, which read unit includes an optical head for generating a read signal, a servo system for positioning the head, a motor for rotating the record carrier and electronic circuits for controlling the reading and retrieving data from the read signal. The device has also has a control unit 20 similar to the user device of Fig.1.

The record carrier 22 is intended for carrying digital information in blocks according to a predefined recording format. The recording format may include a file management system. An example of the predefined recording format is the Blu-ray Disc (BD), which defines storage of real-time data and other data such as application programs. Further examples of the optical disc are the well known CD or the DVD. Real-time information is information to be rendered continuously, in particular information representing digitally encoded video according to a standardized format like MPEG2 or MPEG4.

The optical player 21 has a network interface, e.g. a modem, for connecting the device to a network 12, e.g. the internet. Similar to Fig.1 a server 14 also has a network interface for connecting the server device to the network 12.

In new optical disk standards high definition video is combined with graphics and applications to create an interactive viewing experience. This is similar to interactive TV as explained with Fig. 1 where video is combined with interactive applications that enhance the viewing experience. Typically these applications allow the user to control playback of the video content, get more information on the content being watched or give access to new services. For new services the user devices have a communication interface for establishing a connection to a network such as the internet. Through this connection the application can, for example, provide e-commerce, gambling and information services on the TV.

The interactivity provided in these systems is typically based on an application that is sent in the broadcast or transferred on an optical record carrier together with the A/V content. When the user receives a program that contains an application, the application is extracted from the A/V stream and executed on the receiver device. The application can be directly linked to the A/V content in the program and interact with it, or it can be a standalone application that provides functionality of its own (web-browsing, chat clients etc).

In many current user devices, such as portable disc players or low-end set top boxes that are capable of receiving interactive digital TV, no storage is available so the application always has to be loaded from the broadcast channel. In particular, it is not possible to save the state of the application or to store any auxiliary data such as user settings. This is especially restrictive for interactive games etc, that usually the user to spend some time before reaching the last level. According to the invention a storage application is provided on the user device that provides a virtual local storage, but in fact controls remote storage of data and settings.

It is noted that the storage application as described below in detail usually is implemented in a computer program product for executing in a user device. The program is operative to cause a processor of the standard user device to perform the steps of initiating a socket connection to the remote server, providing an application interface for requests for storing auxiliary data from applications in the user device, and, when a storage request is received, having the auxiliary data stored on the remote server via the network. It is noted that such a socket connection can be established using standard computer languages and libraries, e.g. as provided by the well-known Java programming environment and TCP/IP internet protocols. For the current application the socket connection and the related data streams are hidden for other applications using the functions of the virtual local storage by providing a new application program interface (API) according to a predefined standard. The new API may be using, or even replacing, an existing predefined API for a local storage device, which is usually called overloading. Other applications may use the new API without even knowing that the storage is only virtually local storage, but actually remote.

At the remote server a complementary function for storing the auxiliary data from users is provided. The method of storing auxiliary data from at least one user on the remote server comprising the steps of supporting a socket connection initiated by a storage application in the user device, receiving, via the network, requests for storing auxiliary data from applications in the user device, and, when a storage request is received, storing the auxiliary data on the remote server. In particular the remote server needs to maintain a database of users to retrieve data for the correct user requesting it.

In an embodiment the function for storing the auxiliary data from users includes storing a user identification, and/or an application identification. Such identification data may be provided immediately and automatically when the user device initiates the socket connection, or may be requested according to a separate protocol. For example the user may be requested to enter a code or a password. The server has to acquire and verify the identification data with earlier stored data before retrieving auxiliary data.

In an embodiment transferring and storage of the auxiliary data of users may be in a secure form, e.g. using encryption. Depending on the level of security appropriate for the application, additional keys or passwords may be used to enhance the security.

In an example embodiment the user creates a playlist on the user device for a published disc. The playlist indicates a selection or order of tracks of the storage medium to be played. The playlist data may be generated automatically as auxiliary data, the playlist data representing a selection of, or order of, parts of the audio and/or video stream as played. Alternatively the user may enter a playlist manually, e.g. via the keyboard. The playlist is stored on the virtual local storage, which actually resides in the remote server. Whenever the user plays the same disc, and identifies himself to the storage application, the playlist is retrieved from the virtual local storage, even if the user is playing the disc on a different user device.

It is noted that identifying the user may be implemented in different ways. The user may enter his user identification in one or more user devices, e.g. manually or via a user key such as a smart card. Alternatively an interactive application may require the user to enter identification. In an embodiment the interactive application may be coupled to a unique identification, e.g. a unique serial number, or a registration number. This allows a supplier of the storage service to provide the number for a fee, or to use the act of supplying for advertising other product to the user, e.g. on a website providing the unique numbers. In an embodiment according to the present invention a record carrier which is carrying user data such as video and interactive applications, is provided with a unique disc identifier, preferably in a secure way that prevents copying or modifying the disc identifier. Such disc identifier may be used to identify the user as an official buyer of a legal disc, and entitles such user to the use of the virtual local storage. Hence the user will perceive a bonus value of the disc, which is not available to owners of (illegal) copies of the disc that do not have a (valid) disc identifier.

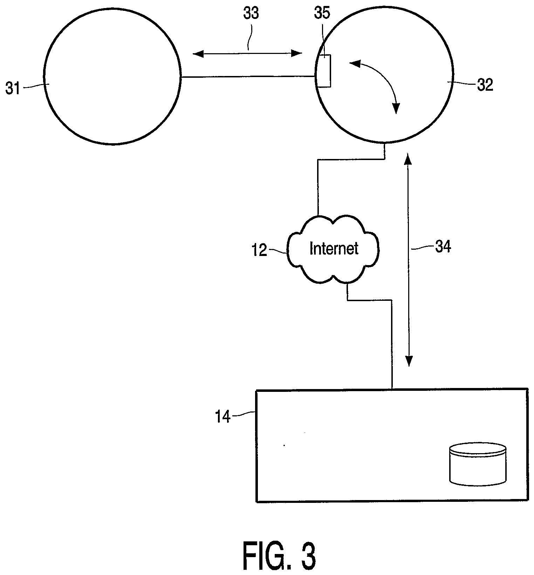

Fig.3 shows a storage application for providing virtual local storage. In a user device an application 31, e.g. an interactive application, needs to store and retrieve auxiliary data 33. A storage application 32 is provided in the user device, which has a application interface 35 to transfer the auxiliary data 33 to other applications. The storage application 34 is initiates a connection to the internet 12 as described below, and transfers the (local) auxiliary data 33 together with some identification (addresses or labels) as network data 34 to the remote server 14.

The storage application 32 may be build in the user device, or may be distributed as a software plug-in, for example via internet, on a record carrier, or send via the broadcast together with any other applications and audio/video content. When loaded it initiates a socket connection to a remote storage server 14. It then provides the application interface (API) 35 to other applications so these can store settings and user data. The application then makes sure that this data is stored on the remote server.

In an embodiment the storage functionality is included in an enhanced interactive application that requires storage to operate. The enhanced interactive application contains the storage application that uses a remote website to store data. This website may, for example, be set up and controlled by the broadcaster that provides the application. An interesting scenario for an application of this idea is for saving the state of an application when the user returns to it. Say the broadcaster provides an interactive gaming program that includes audio/video content as well as an interactive game. The game evolves with every new episode of the program and the position the user is in the game is stored on a remote server. So with every episode of the program (that is for example broadcast once a week) new levels of the game may be included. Some part of the game could be played online, only during the broadcast and other parts could be played offline, during the week when the user is waiting for the new episode to be broadcast.

In an embodiment the same principle is applied to optical disk systems that include enhanced interactivity. For an optical disc player not having storage capabilities, virtual local storage is provided by the storage application that can control access to remote storage, e.g. on the website from the disc publisher. The application may be included on the disc and loaded at startup.

A practical system, e.g. the Blu-ray Disc (BD) ROM standard, may include applications according to a predefined language, e.g. Java. These Java applications may need local storage to store settings and other information, which is accommodated using the virtual local storage according to the invention.

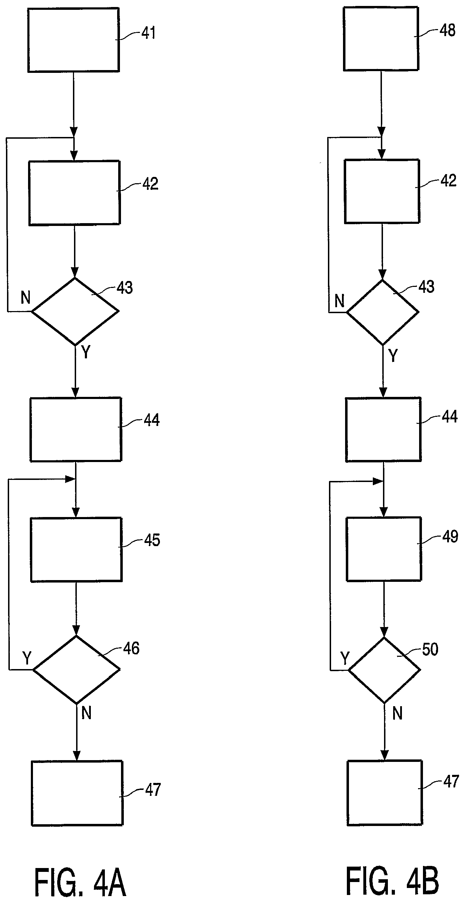

Fig.4 shows an implementation of a storage application. Fig.4A shows storing data on the virtual local storage. Fig.4B shows reading data from the virtual local storage. Of course writing and reading may be performed via the same connection, and both storing and reading are described together below. The following steps are performed by the storage application to setup the virtual local storage. In a first step 41 API-STORE another application informs the application interface of the storage application that it wishes to store data, or in step 48 API-RETRIEVE the application informs the application interface of the storage application that it wishes to retrieve data. In a second step 42 CONN. SETUP the storage application sets up a connection with the remote server, while in step 43 WAIT the completion of the connection is awaited. In a next step 44 STREAM.SETUP a data stream is set up accommodating output data to the remote server, and input data from the server. The location of the server may be specified by a host parameter. An example in a formal computer notation may be (excluding error handling etc):

$$\text{Socket socket = new Socket(Host, Port);}$$

//host is the remote pc, port is the port to //open.

$$\text{OutputStream out = socket.getOutputStream();}$$

$$\text{InputStream in = socket.getInputStream();}$$

In a next step 45 WRITE the data is written to the output stream, until the last data is detected in step 46 WRITE MORE DATA. In step 49 READ data is read from the input stream, until the last data is detected in step 50 READ MORE DATA. Hence the application uses the in- and output streams to write data to the remote server or read data from the remote server. An example in a formal computer notation may be:
out.write(byte[] data); or for read:
while (in.available > 0)
{ in.read(byte[] data); }

Finally, after the interactive application has terminated or indicated that no other data storage requests are to be expected, the connection is closed in a step 47 CLOSE. An example in a formal computer notation may be:
In.close(); out.close(); socket.close();

In an embodiment the storage application allows other applications to read and write data by providing interfaces with read and write methods. The interfaces are the same as those for reading and writing to a file. These interfaces may be defined in a Java.io package, which package is a set of libraries.

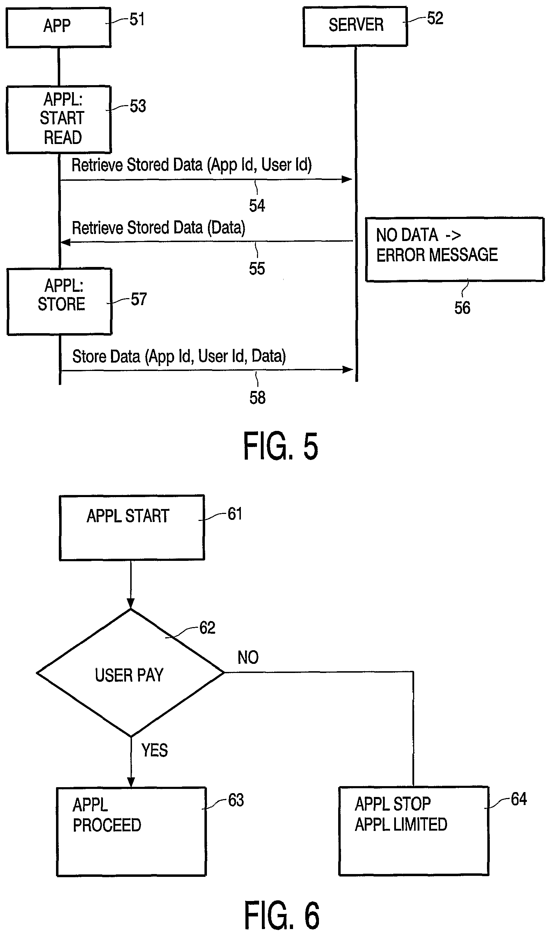

Fig.5 shows a sequence chart of a protocol between a storage application and a server. An interactive application APP 51 is activated by a user on a user device. The sequence chart is showing a simple protocol between the application running on the device (STB or Blu-ray Player) and a remote server 52. The application 51 includes the storage application described above with reference to Fig.4. In a first stage 53 APPL: START READ of the interactive application data is needed and a read action is initiated. A read storage request 54 to retrieve stored data is transferred to the remote server 52 by the storage application. The request has been provided with an application identification (App Id) and/or a user identification (User Id) to indicate to the server which data has been requested. In a data retrieve message 55 data is returned that has been stored earlier. If no such data is available, an error message 56 may be sent be the server. In a second stage 57 APPL: STORE of the interactive application auxiliary data is generated and needs to be stored. A write storage request 58 to write data is transferred to a remote server 52 by the storage application. The request includes the data to be stored, and the application identification (App Id) and/or a user identification (User Id). The server may confirm the correct receiving and storage of the data in a data confirm message (not shown).

Fig.6 shows a flowchart of a storage application requiring payment. An embodiment of the storage application includes requesting the user to pay for using the virtual local storage. In a first step 61 the application is started, and a need for local data storage is detected. Secondly in step USER PAY 62, via a user interface such as a display screen, the user is requested to agree to a payment, e.g. via a credit card or an account available for payments on the network. If the user agrees to pay, the application proceeds as planned in a step APPL.PROCEED 63. However, if the user does not pay, the application may stop, or may continue in a limited mode without the possibility to store auxiliary data.

Although the invention has been explained mainly by embodiments based on storing auxiliary data, it is noted that in the current document auxiliary data indicates any type of data that is produced at the user device. In addition most examples assume a user device not having local storage, but the invention to provide a virtual local storage may be used to provide additional storage for any user device. In particular an existing local storage resource like a memory stick may be enhanced by providing extended storage capacity using the virtual local storage of the current invention. The manufacturer of the memory stick may additionally sell storage space on a remote server to the buyers of the memory stick, whereas the storage application and/or user/application identification may already be included in the memory stick.

It is noted, that in this document the word 'comprising' does not exclude the presence of other elements or steps than those listed and the word 'a' or 'an' preceding an element does not exclude the presence of a plurality of such elements, that any reference signs do not limit the scope of the claims, that the invention may be implemented by means of both hardware and software, and that several 'means' may be represented by the same item of hardware. Further, the scope of the invention is not limited to the embodiments, and the invention lies in each and every novel feature or combination of features described above.

**Claims**

1. Method of providing a virtual local data storage for a user device that is connectable to a remote storage server via a network, the method comprising the steps of

   - initiating a socket connection to the remote storage server,
   - providing an application interface for storage requests for storing auxiliary data from applications in the user device on the virtual local data storage residing in the remote storage server,

   and, when a storage request is received, having the auxiliary data stored on the virtual local data storage via the network,
   **characterized in that** the method comprises

   - providing a record carrier with a unique disc identifier that entitles a user to use the virtual local data storage.

2. Method as claimed in claim 1, wherein having the auxiliary data stored includes storing a user identification, and/or an application identification.

3. Method as claimed in claim 1, wherein providing the application interface includes receiving request for reading data, and, when requested, having the auxiliary data retrieved from the remote server via the network.

4. Method of storing auxiliary data from at least one user on a remote storage server that is connectable to a user device via a network for providing virtual local storage for the user device, the method comprising the steps of

   - supporting a socket connection initiated by a storage application in the user device,
   - receiving, via the network, requests for storing auxiliary data from applications in the user device on the virtual local data storage residing in the remote storage server,

and, when a storage request is received, storing the auxiliary data on the virtual local data storage,
**characterized in that** the method comprises
providing a record carrier with a unique disc identifier that entitles a user to use the virtual local data storage.

5. Method as claimed in claim 4, wherein storing the auxiliary data includes storing a user identification, and/or an application identification.

6. Computer program product for providing data storage for a user device that is connectable to a remote server via a network, which program is operative to cause a processor to perform the method as claimed in any of the claims 1 to 5.

7. User device for use in the method of providing a virtual local data storage as claimed in any of the claims 1 to 3, the user device being connectable to a remote storage server via a network, which device comprises

- transceiver means (15) for connecting the user device to the network,
- control means (20) for performing applications that may generate auxiliary data relating to the applications, and

a storage application (32) for

- initiating a socket connection to the remote storage server,
- providing an application interface (35) for requests for storing auxiliary data from the applications in the user device on the virtual local data storage residing in the remote storage server,

and, when a storage request is received, having the auxiliary data stored on the virtual local data storage via the network,
**characterized in that** the device comprises a unique disc identifier provided with a record carrier that entitles a user to use the data virtual local storage.

8. User device as claimed in claim 7, wherein the device

- comprises read means (24) for retrieving data from a storage medium (22), and
- the control means (20) are arranged for retrieving applications to be performed from the storage medium.

9. Storage medium for carrying data to be retrieved in a user device that is connectable to a remote server via a network, wherein the storage medium comprises a computer program product constituting an application for providing virtual local data storage for the user device, which program is operative to cause a processor to perform the method as claimed in any of the claims 1 to 3.

10. Storage medium as claimed in claim 9, wherein the storage medium comprises at least one stream of real-time information.

**Patentansprüche**

1. Verfahren zum Bereitstellen eines virtuellen lokalen Datenspeichers für eine Benutzervorrichtung, die über ein Netzwerk mit einem fernen Datenspeicherserver verbunden werden kann, das Verfahren umfassend die Schritte

- Einleiten einer Socket-Verbindung zum fernen Datenspeicherserver,
- Bereitstellen einer Anwendungsschnittstelle für Datenspeicheranfragen zum Speichern von Hilfsdaten aus Anwendungen in der Benutzervorrichtung auf dem virtuellen lokalen Datenspeicher, der sich im fernen Datenspeicherserver befindet,

und, wenn eine Datenspeicheranfrage empfangen wird, Speichern der Hilfsdaten auf dem virtuellen lokalen Datenspeicher über das Netzwerk,
**dadurch gekennzeichnet, dass** das Verfahren umfasst

- Bereitstellen eines Aufzeichnungsträgers mit einer einzigartigen Disc-Kennung, die einen Benutzer berechtigt, den virtuellen lokalen Datenspeicher zu verwenden.

**2.** Verfahren nach Anspruch 1, wobei ein Speichern der Hilfsdaten ein Speichern einer Benutzeridentifikation und/oder einer Anwendungsidentifikation enthält.

**3.** Verfahren nach Anspruch 1, wobei ein Bereitstellen der Anwendungsschnittstelle ein Empfangen einer Anfrage zum Lesen von Daten und Abrufen der Hilfsdaten, wenn angefragt, aus dem fernen Server über das Netzwerk enthält.

**4.** Verfahren zum Speichern von Hilfsdaten von zumindest einem Benutzer auf einem fernen Datenspeicherserver, der über ein Netzwerk mit einer Benutzervorrichtung verbunden werden kann, zum Bereitstellen eines virtuellen lokalen Datenspeichers für die Benutzervorrichtung, das Verfahren umfassend die Schritte

- Unterstützen einer Socket-Verbindung, die durch eine Datenspeicheranwendung in der Benutzervorrichtung eingeleitet wird,
- Empfangen, über das Netzwerk von Anfragen zum Speichern von Hilfsdaten aus Anwendungen in der Benutzervorrichtung auf dem virtuellen lokalen Datenspeicher, der sich im fernen Datenspeicherserver befindet,

und, wenn eine Datenspeicheranfrage empfangen wird, Speichern der Hilfsdaten auf dem virtuellen lokalen Datenspeicher,
**dadurch gekennzeichnet, dass** das Verfahren umfasst

- Bereitstellen eines Aufzeichnungsträgers mit einer einzigartigen Disc-Kennung, die einen Benutzer berechtigt, den virtuellen lokalen Datenspeicher zu verwenden.

**5.** Verfahren nach Anspruch 4, wobei ein Speichern der Hilfsdaten ein Speichern einer Benutzeridentifikation und/oder einer Anwendungsidentifikation enthält.

**6.** Rechnerprogrammprodukt zum Bereitstellen eines Datenspeichers für eine Benutzervorrichtung, die über ein Netzwerk mit einem fernen Datenspeicherserver verbunden werden kann, wobei das Programm betriebsbereit ist, einen Prozessor zu veranlassen, das Verfahren nach einem der Ansprüche 1 bis 5 durchzuführen.

**7.** Benutzervorrichtung zur Verwendung in dem Verfahren zum Bereitstellen eines virtuellen lokalen Datenspeichers nach einem der Ansprüche 1 bis 3, wobei die Benutzervorrichtung über ein Netzwerk mit einem fernen Datenspeicherserver verbunden werden kann, wobei die Vorrichtung umfasst
Sendeempfängermittel (15) zum Verbinden der Benutzervorrichtung mit dem Netzwerk,
Steuermittel (20) zum Durchführen von Anwendungen, die Hilfsdaten erzeugen können, die sich auf die Anwendungen beziehen, und
eine Datenspeicheranwendung (32) zum
Einleiten einer Socket-Verbindung zum fernen Datenspeicherserver,
Bereitstellen einer Anwendungsschnittstelle (35) für Anfragen zum Speichern von Hilfsdaten aus den Anwendungen in der Benutzervorrichtung auf dem virtuellen lokalen Datenspeicher, der sich im fernen Datenspeicherserver befindet,
und, wenn eine Datenspeicheranfrage empfangen wird, Speichern der Hilfsdaten auf dem virtuellen lokalen Datenspeicher über das Netzwerk,
**dadurch gekennzeichnet, dass** die Vorrichtung eine einzigartige Disc-Kennung umfasst, die mit einem Aufzeichnungsträger bereitgestellt wird, die einen Benutzer berechtigt, den virtuellen lokalen Datenspeicher zu verwenden.

**8.** Benutzervorrichtung nach Anspruch 7, wobei die Vorrichtung

- Lesemittel (24) zum Abrufen von Daten aus einem Datenspeichermedium (22) umfasst und
- die Steuermittel (20) angeordnet sind, Anwendungen, die durchzuführen sind, aus dem Datenspeichermedium abzurufen.

**9.** Datenspeichermedium zum Tragen von Daten, die abgerufen werden, in einer Benutzervorrichtung, die mit einem fernen Server über ein Netzwerk verbunden werden kann, wobei das Datenspeichermedium ein Rechnerprogrammprodukt umfasst, das eine Anwendung zum Bereitstellen eines virtuellen lokalen Datenspeichers für die Benutzervorrichtung darstellt, wobei das Programm betriebsbereit ist, einen Prozessor zu veranlassen, das Verfahren nach einem der Ansprüche 1 bis 3 durchzuführen.

**10.** Datenspeichermedium nach Anspruch 9, wobei das Datenspeichermedium zumindest einen Strom von Echtzeitinformationen umfasst.

**Revendications**

1. Procédé de fourniture d'un dispositif de stockage de données local virtuel à un dispositif utilisateur qui peut être connecté à un serveur de stockage à distance par le biais d'un réseau, le procédé comprenant les étapes suivantes

   - l'établissement d'une connexion de socket avec le serveur de stockage à distance,
   - la fourniture d'une interface d'application pour des demandes de stockage pour stocker des données auxiliaires provenant d'applications dans le dispositif utilisateur sur le dispositif de stockage de données local virtuel résidant dans le serveur de stockage à distance,

   et, quand une demande de stockage est reçue, le fait d'avoir les données auxiliaires stockées sur le dispositif de stockage de données local virtuel par le biais du réseau,
   **caractérisé en ce que** le procédé comprend

   - la fourniture d'un support d'enregistrement avec un identificateur de disque unique qui autorise un utilisateur à utiliser le dispositif de stockage de données local virtuel.

2. Procédé selon la revendication 1, dans lequel le fait d'avoir les données auxiliaires stockées inclut le stockage d'une identification d'utilisateur et/ou d'une identification d'application.

3. Procédé selon la revendication 1, dans lequel la fourniture de l'interface d'application inclut la réception d'une demande de lecture de données et, quand elle est demandée, le fait d'avoir les données auxiliaires récupérées à partir du serveur à distance par le biais du réseau.

4. Procédé de stockage de données auxiliaires provenant d'au moins un utilisateur sur un serveur de stockage à distance qui peut être connecté à un dispositif utilisateur par le biais d'un réseau pour fournir un dispositif de stockage local virtuel pour le dispositif utilisateur, le procédé comprenant les étapes suivantes

   - le support d'une connexion de socket établie par une application de stockage dans le dispositif utilisateur,
   - la réception, par le biais du réseau, des demandes pour stocker des données auxiliaires provenant d'applications dans le dispositif utilisateur sur le dispositif de stockage de données local virtuel résidant dans le serveur de stockage à distance,

   et, quand une demande de stockage est reçue, le stockage des données auxiliaires sur le dispositif de stockage de données local virtuel,
   **caractérisé en ce que** le procédé comprend

   - la fourniture d'un support d'enregistrement avec un identificateur de disque unique qui autorise un utilisateur à utiliser le dispositif de stockage de données local virtuel.

5. Procédé selon la revendication 4, dans lequel le stockage des données auxiliaires inclut le stockage d'une identification d'utilisateur et/ou d'une identification d'application.

6. Produit de programme informatique pour fournir un dispositif de stockage de données à un dispositif utilisateur qui peut être connecté à un serveur à distance par le biais d'un réseau, lequel programme fonctionne pour amener un processeur à réaliser le procédé selon l'une quelconque des revendications 1 à 5.

7. Dispositif utilisateur pour l'utilisation dans le procédé pour fournir un dispositif de stockage de données local virtuel selon l'une quelconque des revendications 1 à 3, le dispositif utilisateur pouvant être connecté à un serveur de stockage à distance par le biais d'un réseau, lequel dispositif comprend

   - des moyens d'émetteur-récepteur (15) pour connecter le dispositif utilisateur au réseau,
   - des moyens de commande (20) pour effectuer des applications qui peuvent générer des données auxiliaires relatives aux applications, et

une application de stockage (32) pour

- l'établissement d'une connexion de socket avec le serveur de stockage à distance,
- la fourniture d'une interface d'application (35) pour des demandes pour stocker des données auxiliaires provenant des applications dans le dispositif utilisateur sur le dispositif de stockage de données local virtuel résidant dans le serveur de stockage à distance,

et, quand une demande de stockage est reçue, le fait d'avoir les données auxiliaires stockées sur le dispositif de stockage de données local virtuel par le biais du réseau,
**caractérisé en ce que** le dispositif comprend un identificateur de disque unique fourni avec un support d'enregistrement qui autorise un utilisateur à utiliser le dispositif de stockage de données local virtuel.

8. Dispositif utilisateur selon la revendication 7, dans lequel le dispositif

- comprend des moyens de lecture (24) pour récupérer des données à partir d'un support de stockage (22), et
- les moyens de commande (20) sont agencés pour récupérer des applications à effectuer à partir du support de stockage.

9. Support de stockage pour supporter des données à récupérer dans un dispositif utilisateur qui peut être connecté à un serveur à distance par le biais d'un réseau, dans lequel le support de stockage comprend un produit de programme informatique constituant une application pour fournir un dispositif de stockage de données local virtuel au dispositif utilisateur, lequel programme fonctionne pour amener un processeur à réaliser le procédé selon l'une quelconque des revendications 1 à 3.

10. Support de stockage selon la revendication 9, dans lequel le support de stockage comprend au moins un flux d'informations en temps réel.

FIG. 1

FIG. 2

31    33    35    32

12    Internet    34

14

FIG. 3

FIG. 4A

FIG. 4B

APP — 51

SERVER — 52

APPL:
START
READ — 53

Retrieve Stored Data (App Id, User Id)
54

Retrieve Stored Data (Data)
55

NO DATA ->
ERROR MESSAGE
56

APPL:
STORE — 57

Store Data (App Id, User Id, Data)
58

## FIG. 5

APPL START — 61

USER PAY — 62

NO

YES

APPL
PROCEED — 63

APPL STOP
APPL LIMITED — 64

## FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0133852 A
- US 20020199205 A1
- US 20020174430 A